# EUROPEAN PATENT APPLICATION

(11) **EP 4 195 419 A1**
(43) Date of publication of application: **14.06.2023**
(21) Application number: 21213402.7
(22) Date of filing: 09.12.2021
(51) Int. Cl.: H01R 13/10, H01R 13/187, H01R 43/00, B60L 53/16, H01R 4/48

(54) **ELECTRIC CONNECTOR FOR HIGH POWER CHARGING**

(71) Applicant: ABB E-mobility B.V., 2629 JG Delft (NL)
(72) Inventor: GARCIA-FERRE, Francisco, 5400 Baden (CH); KAUFMANN, Lilian, 5413 Birmenstorf (CH); KHEIRI, Pedram, 5212 Hausen (CH); RAAIJMAKERS, Stefan, 2613 WN Delft (NL); ZOON, Wiebe, 2623 NM Delft (NL)
(74) Representative: Maiwald GmbH

(57) **Abstract**

The invention relates to an electric connector (10) for high power charging of, e.g., electric vehicles. The connector (10) comprises a connector body (20), comprising a connector core (22) and two protruding cuboidal elements (24), the connector core (22) and the two protruding cuboidal elements (24) forming a rectangular U, and at least one conducting element (30), arranged at an inner side (26) of the protruding cuboidal element (24). The conducting element (30) protrudes, at least partly, from the inner side (26), and wherein the conducting element (30) is arranged slidably between two notches (32), the notches (32) arranged in the cuboidal element (24), and the conducting element (30) and at least one notch of the notches (32) are configured for conducting charging current.

## Description

### Field of the Invention

The invention relates to the field of electric connectors, particularly for high power charging of, e.g., electric vehicles. The invention further relates to a use.

### Background

Charging connectors may be used for charging electric vehicles, but are not limited to that application. Conventional charging connectors may, in many cases, be limited to a maximum current of about 500 A. However, there may be a need for charging connectors that are able to deal with higher currents. Those charging connectors may have higher requirements, for instance concerning their maintainability.

### Description

It is an objective of the invention to provide a charging connector, particularly with an improved maintainability. This objective is achieved by the subject-matter of the independent claims. Further embodiments are evident from the dependent claims and the following description.

One aspect relates to an electric connector for high power charging, the connector comprising a connector body, comprising a connector core and two protruding cuboidal elements, the connector core and the two protruding cuboidal elements forming a rectangular U, and at least one conducting element, arranged at an inner side of the protruding cuboidal element,
wherein the conducting element protrudes, at least partly, from the inner side, and
wherein the conducting element is arranged slidably between two notches, the notches arranged in the cuboidal element, and wherein the conducting element and at least one notch of the notches are configured for conducting charging current.

The electric connector for high power charging is designed for being able to conduct currents of more than 500 A. At least in some embodiments, the electric connector may be able of delivering a maximum current of about 3 kA and a voltage of about 1.5 kV; however, there may be embodiments that may be configured for lower powers, which may include a maximum current of less than 500 A. The electric connector may, for instance, be used for charging heavy vehicles (e.g. trucks, vessels or aircraft), but may also be used for devices that need high power, such as motors or electric buffers.

Inside the connector, a connector body is arranged. The connector body is configured for supporting a transport of current. The connector body may have any form, e.g. a cubic block, a cylinder, or may be of another form. The connector core and two protruding cuboidal elements form a rectangular U. The rectangular U may have rounded corners. The rectangular U may be configured for surrounding a conducting means, at least by the two protruding cuboidal elements, which may be configured for touching the conducting means at least laterally. The conducting means may act as a mechanical and/or electrical counterpart for the protruding cuboidal elements. The conducting means may be arranged in or on a vehicle. The two protruding cuboidal elements may have an electric contact or conducting element, i.e. at least one electric contact protruding, at least partly, from an inner side of at least one of the cuboidal elements. There may be embodiments that have conducting elements on both inner sides and/or that have a plurality of conducting elements. The connector body and/or the protruding cuboidal elements may be massive and/or may have cooling means, for example cooling channels, e.g. as a passage for a cooling fluid.

The conducting element is configured for conducting the charging current. In at least some embodiments, the total charging current is distributed among a plurality of conducting elements. The conducting elements may comprise or consist of highly conducting material, such as copper, others or a conducting alloy, possibly with a highly conducting coating material, such as gold or silver. The conducting elements may be elastic, at least partly, to reduce an electric transition resistance to the conducting means by exerting a pressure on the conducting means.

The conducting element is arranged slidably between two notches, wherein the notches are arranged in the cuboidal element. The conducting element may be designed as an arc or as a U or similarly, so that each one of the ends of the arc (etc.) are able to engage into each one of the corresponding notches. For reducing an electric transition resistance between the conducting element and the corresponding notch, the conducting element may exert some pressure on the notches. Additionally or as an alternative, the conducting element and/or the corresponding notch may be coated with a material that reduces the electric transition resistance or contact resistance and/or improves the slidability. The end of the conducting element and the corresponding notch may have a corresponding form; for instance, both are rounded or rectangular, hexagonal, or of another form. Alternatively, end of the conducting element and the corresponding notch may have a form that enables "cutting" into the notch; for instance, the notch may have a rounded form, and the end of the conducting element may be rectangular. Both the conducting element and the notches are configured for conducting the charging current, thus enabling a transfer of high power to the corresponding conducting means.

The design of the electric connector as described above and/or below may not only enable a transfer of high power between the connector and the corresponding conducting means, e.g. by many means that reduce electric transition resistances. The design of the electric connector further improves the connector's maintainability and/or its serviceability, particularly because the slidably arranged conducting element(s) can easily be pulled out of the notches. Then, the conducting element(s) may be substituted or repaired. This may advantageously reduce the lifetime cost of the connector.

In various embodiments, the connector further comprises a detachable top element, wherein the detachable top element is arranged at an outer end of at least one of the notches, thus preventing the conducting element from sliding out of the notches. The design of the detachable top element may depend on the form of the notches. For instance, if the notches are designed with a dead end and open to an upper edge of the protruding cuboidal element, then the detachable top element may be arranged at the upper edge, thus covering the notches (or at least one of them) and preventing, by this arrangement, the conducting element from sliding out of the notches. In cases when the notches are designed with open ends on both sides, then one detachable top element may be arranged on each one of the open ends. Analogously, if the notches are designed with an open end towards the distal end of the connector body, then the detachable top element may be arranged on said distal end.

In various embodiments, the detachable top element is arranged by form-locking and/or force-locking means, particularly by at least one of: a screw, a clip, a bayonet lock, a pin, a magnets, and/or by further means.

In various embodiments, the connector core, the two protruding cuboidal elements and/or the detachable top element comprise or consist of copper, and conductive and/or protective outer coat. The materials may include several types of alloys. The notches may be of the same material as the protruding cuboidal elements, e.g. milled into the protruding cuboidal element.

In various embodiments, the connector core and/or the two protruding cuboidal elements contain channels for cooling fluid. The cooling fluid may be a non-conducting fluid. The cooling channels may advantageously further increase the power the connector is configured for.

In various embodiments, the connector core if formed as a cuboidal block or as a cylinder. This may advantageously improve the manner how the connector core is arranged inside the connector.

In various embodiments, the conducting element comprises or consists of at least one of: copper, steel, aluminum, and/or the conducting element is at least partly elastic. These properties may improve the electric conductivity and/or a transition resistance to the conducting means and/or to the protruding cuboidal elements.

In various embodiments, the conducting element is coated with a material that reduces the electric transition resistance and/or improves the slidability, particularly with silver, silver-graphite composites, gold, rhodium, and/or similar materials.

In various embodiments, the notches are arranged in parallel and/or perpendicularly to an upper edge of the protruding cuboidal element. This may provide a high flexibility for individual designs of the connector, possibly within a prescribing norm.

In various embodiments, the connector comprises a plurality of conducting elements, and/or the conducting elements are arranged a the inner side of each one of the protruding cuboidal elements. Said plurality of conducting elements may contribute to enabling a transport of high power by the connector.

An aspect relates to a use of a connector as described above and/or below for high power charging, particularly of electric vehicles. The connector may be used for delivering a maximum current in a range of 3 kA and a maximum voltage of in the range of 1.5 kV. The connector may preferably be configured for delivering DC power.

For further clarification, the invention is described by means of embodiments shown in the figures. These embodiments are to be considered as examples only, but not as limiting.

### Brief Description of the Drawings

The drawings depict:
**Fig. 1** schematically an electric connector according to an embodiment;
**Fig. 2** schematically a part of an electric connector according to an embodiment;
**Fig. 3** schematically an element of an electric connector according to an embodiment;
**Fig. 4** schematically an element of an electric connector according to an embodiment;
**Fig. 5** schematically an element of an electric connector according to an embodiment;
**Fig. 6** schematically an element of an electric connector according to an embodiment;
**Fig. 7** schematically an element of an electric connector according to an embodiment;
**Fig. 8** schematically an element of an electric connector according to an embodiment.

### Detailed Description of Embodiments

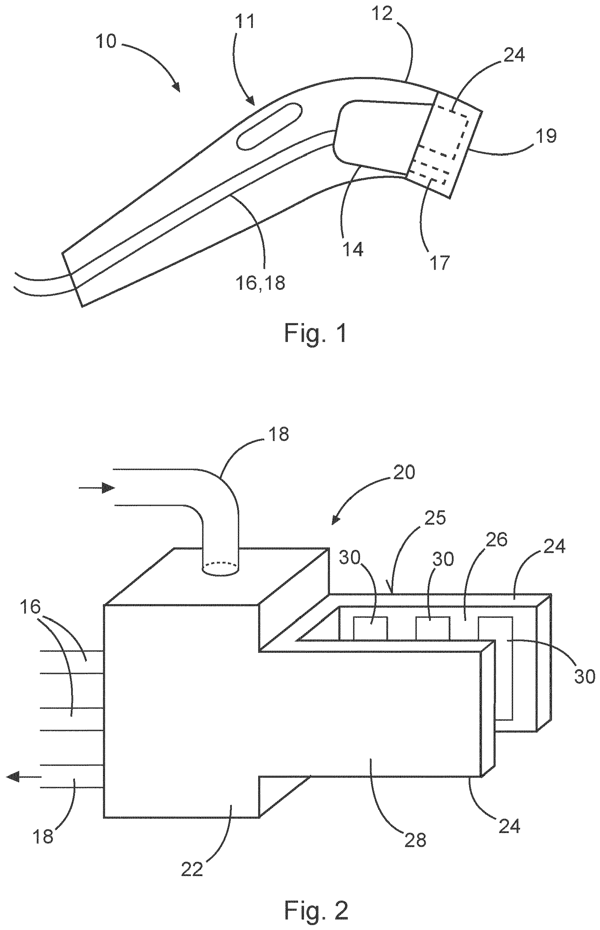

**Fig. 1** shows schematically an electric connector 10 according to an embodiment. The connector 10 has a handle 11, which may help for plugging the connector 10 into a corresponding conducting means (not shown), which may be arranged in or on an electric vehicle, on a mating face 19. The handle 11 may be part of an external enclosure 12 of the connector 10 and/or integrated into the external enclosure 12. The connector 10 shown further has a cable 16 and a fluid channel 18, for cooling fluid, inside the external enclosure 12. The cable 16 and the fluid channel 18 lead to an internal enclosure 14, which holds a connector core 22 (see, e.g., Fig. 2) and protruding cuboidal elements 24. The connector 10 may have further components, e.g. control or pilot pins 17 and/or further ones, which are neglected in this description.

**Fig. 2** shows schematically a part of an electric connector 10 - e.g. the one shown in **Fig. 1** - according to an embodiment. This part comprises a connector body 20, comprising a connector core 22, which is connected to cables 16 and fluid channels 18. The connector body 20 further comprises two protruding cuboidal elements 24, wherein the connector core 22 and the two protruding cuboidal elements 24 form a kind of U, particularly a rectangular U. The U may have rounded inner corners (not shown). Each of the cuboidal elements 24 has an outer side 28 and an inner side 26 and, further, an upper edge 25. In **Fig. 2****,** there are - as an example - three conducting elements 30 visible, which are arranged at an inner side 26 of one of the protruding elements 24. The other protruding cuboidal element 24, whose inner side is not visible in **Fig. 2****,** may also have conducting elements 30.

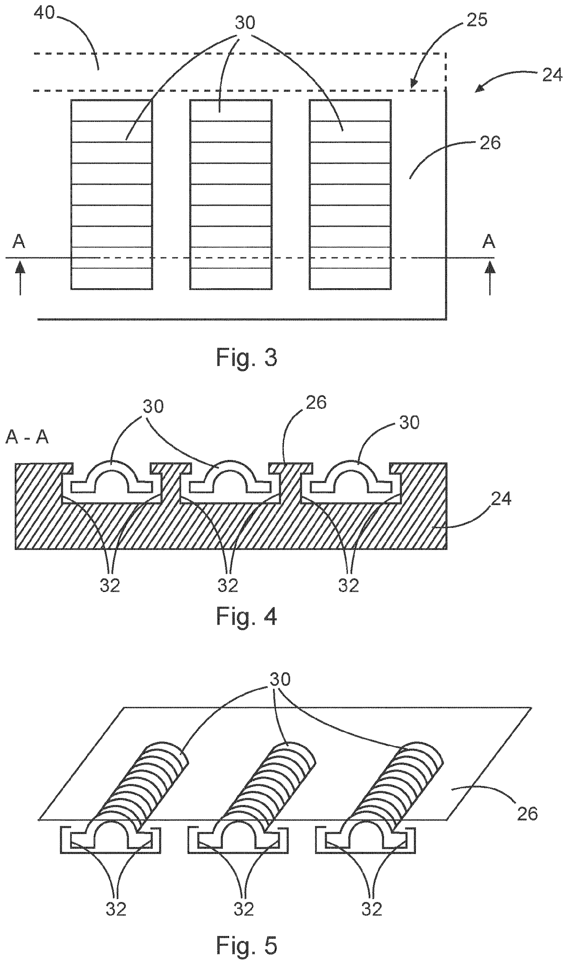

**Fig. 3** shows schematically an element of an electric connector 10 according to an embodiment, namely a part of an inner side 26 of a protruding cuboidal element 24, where a plurality of conducting elements 30 are arranged. **Fig. 3** further shows a detachable top element 40 (shown with dashed lines), which is arranged on top of an upper edge 25 of the cuboidal element 24. It can clearly be seen that the top element 40 "closes" the conducting elements 30 (more precisely: notches, where said conducting elements 30 can slide, see below). Thus, the top element 40 prevents the conducting element 30 from sliding out of the notches. Details of the notches are explained below.

**Fig. 4** shows schematically an element of an electric connector 10 according to an embodiment, namely a longitudinal section A-A of **Fig. 3. Fig. 4** shows that conducting elements 30 are arranged within notches 32, which are arrange in the cuboidal element 24. The notches 32 may be milled into the cuboidal element 24, or otherwise inserted into it. The notches 32 are part of an opening, which is open towards the inner side 26 of a protruding cuboidal element 24. The conducting elements 30 protrude partly from the inner side 26. When a corresponding conducting means - e.g. of an electric vehicle - (not shown) is surrounded by the cuboidal elements 24, charging current may be transferred via the conducting elements 30 to the corresponding conducting means. The conducting elements 30 may be elastic, so that some pressure is exerted on the conducting means, thus reducing an electric transition resistance between the conducting elements 30 and the conducting means. In this embodiment, the ends of the conducting elements 30 and the corresponding notches 32 have a corresponding form, i.e. both are formed rectangular, so that the conducting elements 30 can slide between the two notches 32. **Fig. 5** shows a variation of the conducting elements 30. Their ends are formed as a shoe, so that they can slide between the two notches 32. The conducting elements 30 protrude partly from the inner side 26.

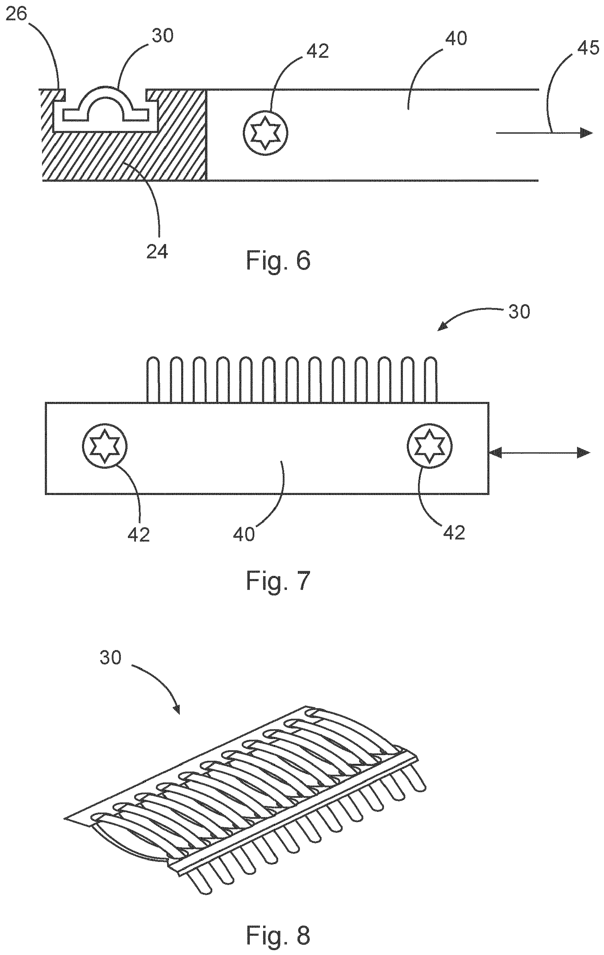

**Fig. 6** shows schematically an element of an electric connector 10 according to an embodiment. Again, the conducting elements 30 are arranged slidably between two notches 32, the notches 32 arranged in the cuboidal element, and the conducting elements 30 protrude partly from the inner side 26. Furthermore, a detachable top element 40 is shown, which has been slid to the right (see arrow 45), to get access to the conducting elements 30. Before removing the detachable top element 40, a screw 42 had been loosened. After having detached the top element 40, the conducting elements 30 can be drawn out its holding notches 32. Then, the slidably arranged conducting elements can easily be pulled out of the notches 32. After that, the conducting elements 30 may be substituted or repaired.

**Fig. 7** and **Fig. 8** show schematically an element of an electric connector 10 according to an embodiment. In **Fig. 7****,** the detachable element 40 is arranged at an outer end of the notches 32 and, thus, prevents the conducting element 30 from sliding out of the notches 32. In **Fig. 8****,** a variation of the conducting element 30 is shown.

### List of Reference Symbols

- 10: connector
- 11: handle
- 12: external enclosure
- 14: internal enclosure
- 16: cable
- 17: control/pilot pins
- 18: fluid channel
- 19: mating face
- 20: connector body
- 22: connector core
- 24: protruding cuboidal elements
- 25: upper edge
- 26: inner side
- 28: outer side
- 30: conducting element
- 32: notches
- 40: detachable top element
- 42: arranging means
- 45: arrow

## Claims

1. An electric connector (10) for high power charging, the connector (10) comprising:
a connector body (20), comprising a connector core (22) and two protruding cuboidal elements (24), the connector core (22) and the two protruding cuboidal elements (24) forming a rectangular U, and
at least one conducting element (30), arranged at an inner side (26) of the protruding cuboidal element (24),
wherein the conducting element (30) protrudes, at least partly, from the inner side (26), and wherein the conducting element (30) is arranged slidably between two notches (32), the notches (32) arranged in the cuboidal element (24),
wherein the conducting element (30) and at least one notch of the notches (32) are configured for conducting charging current.

2. The connector (10) of claim 1, further comprising a detachable top element (40), wherein the detachable top element (40) is arranged at an outer end of at least one of the notches (32), thus preventing the conducting element (30) from sliding out of the notches (32).

3. The connector (10) of claim 2,
wherein the detachable top element (40) is arranged by form-locking and/or force-locking means, particularly by at least one of: a screw, a clip, a bayonet lock, a pin, a magnets, and/or by further means.

4. The connector (10) of any one of the preceding claims,
wherein the connector core (22), the two protruding cuboidal elements (24) and/or the detachable top element (40) comprise or consist of copper, and optionally an isolating outer coat.

5. The connector (10) of any one of the preceding claims,
wherein the connector core (22) and/or the two protruding cuboidal elements (24) contain channels for cooling fluid.

6. The connector (10) of any one of the preceding claims,
wherein the connector core (22) if formed as a cuboidal block or as a cylinder.

7. The connector (10) of any one of the preceding claims,
wherein the conducting element (30) comprises or consists of at least one of:
copper, steel, aluminum, and/or
wherein the conducting element (30) is at least partly elastic.

8. The connector (10) of any one of the preceding claims,
wherein the conducting element (30) is coated with a material that reduces the electric transition resistance and/or improves the slidability, particularly with gold, rhodium, silver, silver-graphite composites, and/or similar materials.

9. The connector (10) of any one of the preceding claims,
wherein the notches (32) are arranged in parallel and/or perpendicularly to an upper edge (25) of the protruding cuboidal element (24).

10. The connector (10) of any one of the preceding claims,
wherein an end of the conducting element (30) has a form that corresponds to the form of the notch (32), particularly a rounded, rectangular or a hexagonal form.

11. The connector (10) of any one of the preceding claims,
wherein the connector comprises a plurality of conducting elements (30), and/or the conducting elements (30) are arranged a the inner side (26) of each one of the protruding cuboidal elements (24).

12. Use of a connector (10) of any one of the preceding claims for high power charging, particularly of electric vehicles, for delivering a maximum current of about 3 kA and maximum voltage of about 1.5 kV.
